# EUROPÄISCHE PATENTSCHRIFT

(11) **EP 2 261 544 B1**
(45) Veröffentlichungstag und Bekanntmachung des Hinweises auf die Patenterteilung: **31.08.2011**
(21) Anmeldenummer: 10005688.6
(22) Anmeldetag: 01.06.2010
(51) Int. Cl.: F16L 33/03

(54) **Befestigungsschelle**
Fixing clamp
Anneau de fixation

(30) Priorität: 09.06.2009 DE 102009024813
(43) Veröffentlichungstag der Anmeldung: 15.12.2010
(73) Patentinhaber: Solvis GmbH & Co. KG, 38112 Braunschweig (DE)
(72) Erfinder: Beutler, Timm, 38114 Braunschweig (DE)
(74) Vertreter: Lins, Edgar

(56) Entgegenhaltungen:
- DE-A1- 1 500 966
- DE-C1- 3 832 875
- FR-A1- 2 504 643

## Beschreibung

Die Erfindung betrifft eine Befestigungsschelle mit zwei einseitig an einem Verbindungsende miteinander verbundenen Federschenkeln, die in einem Haltebereich jeweils eine Auswölbung zum teilweisen Umfassen wenigstens eines zu haltenden Gegenstandes mit einem zylindrischen Querschnitt aufweisen und zwischen dem Haltebereich und dem Verbindungsende einen Federbereich ausbilden, in dem der maximale Abstand zwischen den Federschenkeln geringer ist als der Abstand im Bereich der Auswölbungen.

Befestigungsschellen dienen zur Befestigung von Schläuchen auf Schlauchstutzen, insbesondere aber auch zur Sicherung einer Rohrverbindung, in der eine hergestellte Steckverbindung zwischen Rohrabschnitten bzw. Armaturen gegen ein axiales Lösen gesichert wird.

Es ist bekannt, derartige Befestigungsschellen mit einem Drehgelenk an einem Verbindungsende zu versehen, sodass mit Auswölbungen zum Umfassen des zu haltenden Gegenstands versehene Haltebereiche aufklappbar sind, um den zu haltenden Gegenstand zu umfassen und im montierten Zustand zusammengeklappt werden, wobei Abkantungen vorgesehen sein können, mit denen hinter flanschartige Enden der zu verbindenden Gegenstände gegriffen wird, um ein axiales Lösen der Verbindung zu verhindern. Zur Sicherung derartiger Rohrschellen ist es bekannt, die Schenkel an ihren freien Enden, also an den vom Verbindungsende entfernt liegenden Ende mit einer Schraubvorrichtung o. ä. zu versehen, um die Befestigungsschenkel im geschlossenen Zustand zu halten und ein Aufklappen der Befestigungsschenkel zu verhindern, wodurch die Haltefunktion entfallen würde.

Derartige Befestigungsschellen sind bewährt, benötigen jedoch viele Teile, die miteinander verbunden werden müssen. Somit gestaltet sich bereits die Herstellung dieser Schellen aufwändig. Darüber hinaus ist die Sicherung der Befestigungsschelle mittels einer Schraubverbindung o. ä. ebenfalls aufwändig und erfordert einigen Montageaufwand.

Es sind darüber hinaus Befestigungsschellen der eingangs erwähnten Art bekannt, die eine gewisse Haltefunktion aufgrund ihrer Federwirkung zur Verfügung stellen. Die entsprechenden Befestigungsschellen werden dabei mittels der Federwirkung auf den zu befestigenden Gegenstand gedrückt. Nachteilig an diesen Befestigungsschellen ist eine begrenzte Befestigungskraft. Werden höhere Haltekräfte benötigt, muss ein sehr starker Federstahl verwendet werden; der die Handhabung der Befestigungsschelle erschwert und aufgrund der hohen elastischen Rückstellkräfte auch Verletzungsgefahren für die handhabende Person mit sich bringt.

DE-A-15000966 beschreibt eine Befestigungsschelle nach denOoberbegriff des Anspruchs 1.

Der vorliegenden Erfindung liegt daher die Aufgabe zugrunde, eine Befestigungsschelle der eingangs erwähnten Art zu erstellen, mit der bei einfacher Handhabung und einfacher Herstellung eine hohe Befestigungskraft realisierbar ist, ohne dass aufgrund hoher Federkräfte eine Verletzungsgefahr besteht.

Zur Lösung dieser Aufgabe ist eine Befestigungsschelle der eingangs erwähnten Art erfindungsgemäß gekennzeichnet durch eine Verriegelungsklammer, die die Federschenkel in dem Federbereich übergreift und fixiert, sodass aufgrund der dadurch bewirkten Verkürzung der Federlänge der Federschenkel die Federschenkel im Haltebereich an einem Aufspreizen gehindert sind. erstrecken sich zum freien Ende hin Anlaufabschnitte 6, die schräg nach außen gerichtet sind, um so gemeinsam einen Zentriertrichter zum Aufschieben auf den zu haltenden Gegenstand zu bilden. Die Anlaufabschnitte sind mit einem weiter nach außen abgewinkelten Endabschnitt 7 abgeschlossen.

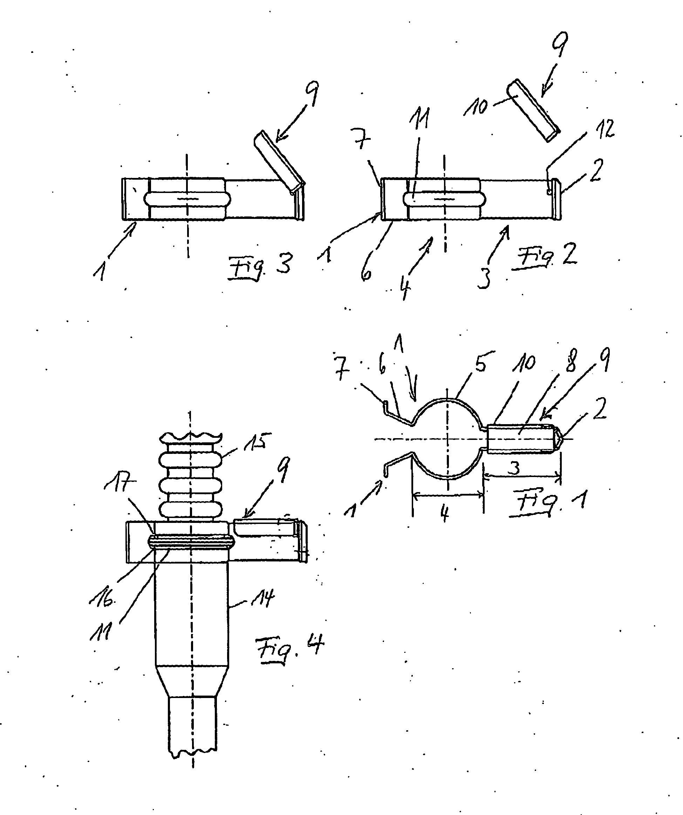

Figur 1 lässt erkennen, dass die Federschenkel 1 im Federbereich 3 durch ein Basisteil 8 einer Verriegelungsklammer 9 abgedeckt sind. Die Verriegelungsklammer 9 übergreift die beiden Federschenkel 1 an ihren Außenseiten mit Längswänden 10, die nach unten von dem Basisteil 8 abgewinkelt sind.

Figur 2 verdeutlicht, dass die Federschenkel 1 aus einem Flachmaterial gebildet sind und dass sich ihre Höhe aus der Breite des Flachmaterials ergibt. Im Haltebereich 4 sind die Federschenkel 1 mit einem Längsschlitz 11 versehen, durch den die Flansche einer Flanschverbindung hindurchragen können, um mittels der Befestigungsschelle in axialer Richtung gesichert zu werden.

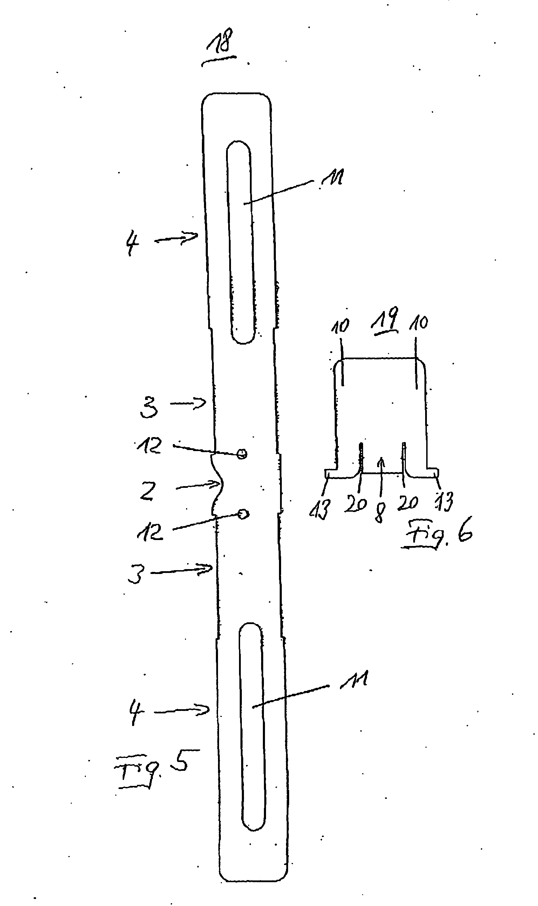

Figur 2 verdeutlicht, dass die Federschenkel 1 im Federbereich 3 nahe dem Verbindungsende 2 eine Aufnahme 12 in Form eines Durchgangslochs aufweisen, mit der eine Schwenkverbindung der Verriegelungsklammer 9 mit den Federschenkeln realisiert wird. Hierzu wird die Verriegelungsklammer 9 mit von den Längswänden 10 nach innen ragenden Drehlageransätzen 13 (Figur 6) schwenkbar an den beiden Federschenkeln 1 befestigt, wie dies Figur 3 zeigt. Bei einem vollständigen Hochklappen der Verriegelungsklammer 9 sind die Federschenkel im Federbereich 3 vollständig freigegeben und können auf einen zu haltenden Gegenstand federnd aufgeschnappt werden. Zur Herstellung der Verriegelung im aufgeschnappten Zustand wird lediglich die Verriegelungsklammer 9 nach unten in die in Figur 1 dargestellte Verriegelungsstellung geklappt, wodurch ein Aufspreizen der Federschenkel 1 nunmehr unterbunden ist und eine sichere Befestigung durch die Befestigungsschelle erreicht wird.

Figur 4 zeigt beispielhaft eine Verbindung zwischen einen Rohranschluss 14 und einem Wellschlauch 15 mittels zweier Flansche 16, 17, die durch den Längsschlitz 11 radial hindurch ragen. Nachdem die Befestigungsschelle mit den Federschenkeln 1 federnd in die in Figur 4 dargestellte. Position aufgeschnappt worden ist, wird die Verriegelungsklammer 9 heruntergeklappt, um die Federschenkel 1 im Federbereich 3 an einem Aufspreizen zu hindern. Dadurch ist die Verriegelung der Flanschverbindung der Flansche 16, 17 mit der Befestigungsschelle gesichert, weil die durch den Längsschlitz 11 ragenden Flansche 16, 17 gegen ein axiales Auseinanderziehen durch die Ränder des Längsschlitzes 11 gesichert sind.

Figur 5 verdeutlicht, dass die aus den Federschenkeln 1 gebildete Befestigungsschelle aus einem einzigen Stück besteht, das als Stanzzuschnitt 18 aus einem Flachmaterial hergestellt ist. Das Flachmaterial ist vorzugsweise ein Edel-Federstahl. Der Stanzzuschnitt 18 lässt einen symmetrischen Aufbau der Befestigungsschelle erkennen, in dessen Mitte das Verbindungsende 2 liegt. Durch Abkantungen verlaufen die Federbereiche 3 dann parallel zueinander. Gleichzeitig wird in den Haltebereichen 4, die die Längsschlitze 11 aufweisen die Ausbildung der Auswölbung 5 vorgenommen und die Abkantungen für die Anlaufabschnitte 6 und Endabschnitte 7 hergestellt.

Figur 5 lässt noch die durch Durchgangslöcher gebildeten Aufnahmen 12 erkennen, in denen die Verriegelungsklammern 9 schwenkbar befestigt werden.

Figur 6 zeigt, dass auch die Verriegelungsklammer 9 aus einem einstückigen Stanzzuschnitt 19 gebildet ist. Die Abkantlinie zwischen dem zentralen Basisteil 8 und den Längswänden 10 erfolgt in Verlängerung von Einschnitten 20. Am zum Verbindungsende 2 hin zeigenden Ende der Längswände 10 befinden sich die Drehlageransätze 13, die von den nach unten abgekanteten Längswänden 10 nochmals um 90° abgewinkelt nach innen abstehen und durch die als Durchgangslöcher gebildeten Aufnahmen 12 hindurchragen, um so die schwenkbare Anlenkung der Verriegelungsklammer 9 an die Federschenkel 1 zu realisieren.

Es ist ohne weiteres erkennbar, dass die erfindungsgemäße Befestigungsschelle aus zwei einfachen Stanzzuschnitten 18, 19 gebildet ist und durch einfache Abkant- und Biegevorgänge hergestellt werden kann. Die Handhabung der Befestigungsschelle zur Sicherung des zu haltenden Elements erfolgt durch das bloße Herabklappen der Verriegelungsklammer 9, benötigt somit kein Werkzeug und keine aufwändigen Handhabungsvorgänge. Dennoch ist eine große Sicherheit für die Herstellung einer Flanschverbindung, eines Schlauchanschlusses o. dgl. gegeben.

Die erfindungsgemäße Befestigungsschelle lässt sich mit den Federschenkeln auf den zu haltenden Gegenstand aufschnappen, wobei eine relativ geringe Federkraft erforderlicht ist, um die Befestigungsschelle an Ort und Stelle zu fixieren. Danach wird die Verriegelungsklammer auf die Federschenkel in dem Federbereich aufgesetzt. Durch die Blockierung des Federweges der Federschenkel im Federbereich durch die Verriegelungsklammer können die Federschenkel sich nicht mehr aufspreizen und sind daher in der den Gegenstand haltenden Stellung blockiert. Dabei wird die Verriegelungsklammer auf den Federbereich aufgesetzt, hält also die Federschenkel vom Verbindungsende aus gesehen vor dem zu haltenden Gegenstand in der verriegelten Position. Die Funktion der erfindungsgemäßen Verriegelungsklammer unterscheidet sich daher prinzipiell von der im Stand der Technik üblichen Verriegelung der Halteschenkel einer Befestigungsschelle an deren freien Enden, also vom Verbindungsende der Befestigungsschenkel aus gesehen hinter dem zu haltenden Gegenstand. Darüber hinaus erfordert das Aufsetzen der erfindungsgemäßen Verriegelungsklammer kein Werkzeug, sondern lediglich einen einfachen Handgriff. Die Handhabung der erfindungsgemäßen Befestigungsschelle ist daher außerordentlich einfach und zeitsparend.

In einer besonders bevorzugten Ausführungsform der Erfindung ist die Verriegelungsklammer U-förmig mit einem flachen Basisteil und nach unten abgewinkelten Längswänden ausgebildet, wobei das Basisteil zur Auflage auf den Federschenkeln im Federbereich vorgesehen ist, sodass die Längswände die Federschenkel im Federbereich jeweils auf der Außenseite zur Verhinderung des Aufspreizens der Federschenkel im Federbereich übergreifen. Eine derartige Verriegelungsklammer ist nicht nur simpel im Aufbau, sondern kann in besonders vorteilhafter Weise schwenkbar mit Drehlageransätzen in Aufnahmen gelagert sein und so aus einer verriegelten Stellung in eine das Aufspreizen der Federschenkel im Federbereich frei gebenden Stellung hochschwenkbar sein. In der hoch geschwenkten Stellung kann die Befestigungsschelle federnd auf den zu haltenden Gegenstand aufgeschnappt werden. Danach muss lediglich die Verriegelungsklammer herunter geschwenkt werden, um die Federschenkel an einem etwaigen Aufspreizen zu hindern.

Die Federschenkel der Befestigungsschelle können einstückig miteinander verbunden sein. Dies gelingt mit sehr einfachem Ausgangsmaterial dadurch, dass die Federschenkel aus einem Flachmaterial durch Ausstanzen, Abkanten und Biegen gebildet sind.

Die Verriegelung der Federschenkel durch die Verriegelungsklammer kann in sehr einfacher Weise erfolgen, wenn die Federschenkel im Federbereich im montierten Zustand parallel zueinander verlaufen. In diesem Fall verlaufen auch die Längswände der Verriegelungsklammer parallel. Auch die Verriegelungsklammer kann in einfacher Weise aus einem Flachmaterial durch Ausstanzen und Abkanten gebildet sein. Beim parallelen Verlauf der Federschenkel im Federbereich ist eine einfache Abkantung der Längswände von dem Basisteil durch Zueinander parallele Abkantlinien möglich.

Trotz des einfachen Aufbaus eignet sich die erfindungsgemäße Befestigungsschelle für die Ausübung hoher Haltekräfte und daher auch zur Sicherung von Rohrverbindungen, bei denen zwei Flanschteile aneinander anliegen. Erfindungsgemäß sind daher die beiden Federschenkel im Haltebereich mit jeweils einem Schlitz versehen, der zum beidseitigen Erfassen einer Flanschverbindung in denen Axialrichtung geeignet ist. Die beiden miteinander verbundenen Flansche ragen somit durch den Schlitz und werden durch die Schlitzränder der Federschenkel im Haltebereich gegen ein axiales Lösen gesichert.

Zur Erleichterung des federnden Aufschnappens der Befestigungsschelle auf den zu haltenden Gegenstand können die Federschenkel an ihren nicht miteinander verbundenen freien Enden jenseits des Haltebereichs jeweils einen schräg nach außen gestellten Anlaufabschnitt aufweisen. In an sich bekannter Weise kann der Anlaufabschnitt mit einem weiter nach außen abgewinkelten Endabschnitt versehen sein, um ein unbeabsichtigtes Einhaken des Endes des Federschenkels in das Material des zu haltenden Gegenstands zu vermeiden.

Die maximale Verriegelung der Befestigungsschelle mittels der Verriegelungsklammer wird erreicht, wenn sich die Verriegelungsklammer über die gesamte Länge des Federabschnitts erstreckt.

Die Aufnahmen für die Drehlageransätze zur schwenkbaren Befestigung der Verriegelungsklammer an den Federschenkeln sind vorzugsweise an den Federschenkeln vorgesehen, sodass die Drehlageransätze an den Verriegelungsklammern vorgesehen sind. Auch diese Drehlageransätze können einstückig mit den Verriegelungsklammern verbunden sein und bei der Herstellung aus einem Flachmaterial realisiert werden.

Die Aufnahmen der Drehlageransätze in den Federschenkeln sind in einfacher Ausführung Durchgangslöcher. Sie sind vorzugsweise nahe dem Verbindungsende angeordnet. Die Verriegelungsklammer kann zwischen Basisteil und abgewinkelten Längswänden Einschnitte aufweisen, in die die Federschenkel beim Hochschwenken der Verriegelungsklammer hineinragen.

Die erfindungsgemäße Befestigungsschelle eignet sich auch zum Halten eines Schlauchs auf einem Schlauchstutzen, wobei sich die Federschenkel im Haltebereich in das elastisch nachgebende Schlauchmaterial eindrücken können. Auch hierfür ist die Ausbildung eines Schlitzes in den Federschenkeln im Haltebereich sinnvoll.

Die Erfindung soll im Folgenden anhand eines in der Zeichnung dargestellten Ausführungsbeispiels näher erläutert werden. Es zeigen:
- Figur 1: eine Draufsicht auf eine erfindungsgemäße Befestigungsschelle, die mit einer Verriegelungsklammer verriegelt ist;
- Figur 2: eine Seitenansicht der Befestigungsschelle gemäß Figur 1 mit ei- ner Verriegelungsklammer im nicht montierten Zustand;
- Figur 3: die Seitenansicht gemäß Figur 2 mit der Verriegelungsklammer im montierten Zustand;
- Figur 4: eine Seitenansicht der erfindungsgemäßen Befestigungsschelle im auf eine Flanschverbindung aufgeschnappten Zustand;
- Figur 5: ein aus einem Flachmaterial ausgestanztes Stanzteil, aus dem die Federschenkel der Befestigungsschelle durch Abkanten und Wie- gen herstellbar sind;
- Figur 6: ein Stanzteil aus einem Flachmaterial zur Ausbildung der Verriege- lungsklammer.

Die in Figur 1 in Draufsicht dargestellte Befestigungsschelle weist zwei Federschenkel 1 auf, die an einem Verbindungsende 2 miteinander verbunden sind und sich parallel verlaufend über einen Federbereich 3 erstrecken, an den sich ein Haltebereich 4 anschließt. In dem Haltebereich 4 sind die Federschenkel 1 mit einer kreisabschnittförmigen Auswölbung 5 versehen. Beide Auswölbungen 5 der beiden Federschenkel 1 begrenzen einen etwa kreisförmigen Querschnitt und sind daher zum Halten eines etwa kreiszylindrischen Gegenstandes ausgebildet. Vom Verbindungsende 2 aus gesehen hinter der Auswölbung 5

## Patentansprüche

1. Befestigungsschelle mit zwei einseitig an einem Verbindungsende (2) miteinander verbundenen Federschenkeln (1), die in einem Haltebereich (4) jeweils eine Auswölbung (5) zum teilweisen Umfassen wenigstens eines zu haltenden Gegenstands mit einem zylindrischen Querschnitt aufweisen und zwischen dem Haltebereich (4) und dem Verbindungsende (2) einen Federbereich (3) ausbilden, in dem der maximale Abstand zwischen den Federschenkeln (1) geringer ist als der Abstand im Bereich der Auswölbungen (5), **gekennzeichnet durch** eine Verriegelungsklammer (9), die die Federschenkel (1) in dem Federbereich (3) übergreift und fixiert, sodass aufgrund der **dadurch** bewirkten Verkürzung der Federlänge der Federschenkel (1) die Federschenkel (1) im Haltebereich (4) an einem Aufspreizen gehindert sind.

2. Befestigungsschelle nach Anspruch 1, **dadurch gekennzeichnet, dass** die Verriegelungsklammer (9) U-förmig mit einem flachen Basisteil (8) und nach unten abgewinkelten Längswänden (10) ausgebildet ist und dass das Basisteil (8) zur Auflage auf den Federschenkeln (1) im Federbereich (3) vorgesehen ist, sodass die Längswände (10) die Federschenkel (1) im Federbereich (3) jeweils auf der Außenseite zur Verhinderung des Aufspreizens der Federschenkel (1) im Federbereich (3) übergreifen.

3. Befestigungsschelle nach Anspruch 2, **dadurch gekennzeichnet, dass** die Verriegelungsklammer (9) schwenkbar mit Drehlageransätzen (13) in Aufnahmen (12) gelagert ist und aus einer verriegelnden Stellung in eine das Aufspreizen der Federschenkel (1) im Federbereich (3) freigebenden Stellung hochschwenkbar ist.

4. Befestigungsschelle nach einem der Ansprüche 1 bis 3, **dadurch gekennzeichnet, dass** die Federschenkel (1) einstückig miteinander verbunden sind.

5. Befestigungsschelle nach Anspruch 4, **dadurch gekennzeichnet, dass** die Federschenkel (1) aus einem Flachmaterial durch Austanzen, Abkanten und Biegen gebildet sind.

6. Befestigungsschelle nach einem der Ansprüche 1 bis 5, **dadurch gekennzeichnet, dass** die Federschenkel (1) im Federbereich (3) im montierten Zustand parallel zueinander verlaufen.

7. Befestigungsschelle nach einem der Ansprüche 1 bis 6, **dadurch gekennzeichnet, dass** die Verriegelungsklammer (9) aus einem Flachmaterial durch Ausstanzen und Abkanten gebildet ist.

8. Befestigungsschelle nach einem der Ansprüche 1 bis 7, **dadurch gekennzeichnet, dass** die beiden Federschenkel (1) im Haltebereich (4) jeweils einen Schlitz (11) zum beidseitigen Erfassen einer Flanschverbindung in deren Axialrichtung aufweisen.

9. Befestigungsschelle nach einem der Ansprüche 1 bis 8, **dadurch gekennzeichnet, dass** die Federschenkel an ihrem nicht miteinander verbundenen freien Enden jenseits des Haltebereichs (4) jeweils einen schräg nach außen gestellten Anlaufabschnitt (6) zum Aufschieben des Haltebereichs (4) auf den zu haltenden Gegenstand aufweisen.

10. Befestigungsschelle nach Anspruch 9, **dadurch gekennzeichnet, dass** die Anlaufabschnitte (6) mit einem weiter nach außen abgewinkelten Endabschnitt (7) versehen sind.

11. Befestigungsschelle nach einem der Ansprüche 1 bis 10, **dadurch gekennzeichnet, dass** sich die Verriegelungsklammer (9) über die gesamte Länge des Federbereichs (3) erstreckt.

12. Befestigungsschelle nach einem der Ansprüche 3 bis 11, **dadurch gekennzeichnet, dass** die Aufnahmen (12) für die Drehlageransätze (13) in den Federschenkeln (1) vorgesehen sind.

13. Befestigungsschelle nach einem der Ansprüche 3 bis 12, **dadurch gekennzeichnet, dass** die Aufnahmen (12) Durchgangslöcher sind.

14. Befestigungsschelle nach einem der Ansprüche 3 bis 13, **dadurch gekennzeichnet, dass** die Aufnahmen (12) nahe dem Verbindungsende (2) angeordnet sind und dass die Verriegelungsklammer (9) zwischen Basisteil (8) und abgewinkelten Längswänden (10) Einschnitte (20) aufweist, in die die Federschenkel (1) beim Hochklappen der Verriegelungskammer (9) hineinragen.

## Claims

1. Fastening clip having two spring legs (1) connected to one another on one side at a connecting end (2), which spring legs have in a holding region (4) a respective bulge (5) for partially encompassing at least one object to be held having a cylindrical cross section, and form a spring region (3) between the holding region (4) and the connecting end (2), in which spring region the maximum spacing between the spring legs (1) is smaller than the spacing in the region of the bulges (5), **characterized by** a locking clamp (9) which engages over and fixes the spring legs (1) in the spring region (3) such that, owing to the resulting shortening of the spring length of the spring legs (1), the spring legs (1) in the holding region (4) are prevented from spreading out.

2. Fastening clip according to Claim 1, **characterized in that** the locking clamp (9) is designed to be U-shaped with a flat base part (8) and downwardly angled longitudinal walls (10), and **in that** the base part (8) is intended to bear on the spring legs (1) in the spring region (3) such that the longitudinal walls (10) engage over the spring legs (1) in the spring region (3), in each case on the outside, to prevent the spring legs (1) in the spring region (3) from spreading out.

3. Fastening clip according to Claim 2, **characterized in that** the locking clamp (9) is pivotably mounted in receptacles (12) by means of pivot bearing lugs (13) and can be pivoted up from a locking position into a position which enables the spring legs (1) in the spring region (3) to spread out.

4. Fastening clip according to one of Claims 1 to 3, **characterized in that** the spring legs (1) are connected to one another in one piece.

5. Fastening clip according to Claim 4, **characterized in that** the spring legs (1) are formed from a flat material by punching, folding and bending.

6. Fastening clip according to one of Claims 1 to 5, **characterized in that** the spring legs (1) in the spring region (3) extend parallel to one another in the mounted state.

7. Fastening clip according to one of Claims 1 to 6, **characterized in that** the locking clamp (9) is formed from a flat material by punching and folding.

8. Fastening clip according to one of Claims 1 to 7, **characterized in that** the two spring legs (1) in the holding region (4) each have a slot (11) for seizing a flange connection on both sides in its axial direction.

9. Fastening clip according to one of Claims 1 to 8, **characterized in that** the spring legs have, at their non-interconnected free ends, beyond the holding region (4), in each case an obliquely outwardly positioned run-on portion (6) for pushing the holding region (4) onto the object to be held.

10. Fastening clip according to Claim 9, **characterized in that** the run-on portions (6) are provided with an end portion (7) which is angled further outwards.

11. Fastening clip according to one of Claims 1 to 10, **characterized in that** the locking clamp (9) extends over the entire length of the spring region (3).

12. Fastening clip according to one of Claims 3 to 11, **characterized in that** the receptacles (12) for the pivot bearing lugs (13) are provided in the spring legs (1).

13. Fastening clip according to one of Claims 3 to 12, **characterized in that** the receptacles (12) are through-holes.

14. Fastening clip according to one of Claims 3 to 13, **characterized in that** the receptacles (12) are arranged close to the connecting end (2), and **in that** the locking clamp (9) has incisions (20) between the base part (8) and angled longitudinal walls (10), into which incisions the spring legs (1) project when the locking clamp (9) is swung up.

## Revendications

1. Collier de fixation comprenant, reliées ensemble d'un côté sur une extrémité de liaison (2), deux branches de ressort (1) qui présentent chacune un renflement (5) dans une région de maintien (4) pour entourer partiellement au moins un objet à maintenir ayant une section cylindrique, et qui forment entre la région de maintien (4) et l'extrémité de liaison (2) une région de ressort (3) dans laquelle l'espacement maximal entre les branches de ressort (1) est inférieur à l'espacement dans la région des renflements (5), **caractérisé par** une pince de verrouillage (9) qui chevauche et fixe les branches de ressort (1) dans la région de ressort (3), de sorte qu'en raison du raccourcissement des longueurs de ressort qui en résulte pour les branches de ressort (1), les branches de ressort (1) sont empêchées de s'écarter dans la région de maintien (4).

2. Collier de fixation selon la revendication 1, **caractérisé en ce que** la pince de verrouillage (9) est formée en U avec une partie de base (8) plane et des côtés longitudinaux (10) pliés vers le bas, et **en ce que** la partie de base (8) est prévue pour s'appuyer sur les branches de ressort (1) dans la région de ressort (3), de sorte que les côtés longitudinaux (10) chevauchent les branches de ressort (1) dans la région de ressort (3), chacune sur sa face externe, pour empêcher l'écartement des branches de ressort (1) dans la région de ressort (3).

3. Collier de fixation selon la revendication 2, **caractérisé en ce que** la pince de verrouillage (9) est montée pivotante grâce à des appendices formant tourillons (13) dans des logements (12), et est apte à pivoter vers le haut à partir d'une position de verrouillage vers une position libérant l'écartement des branches de ressort (1) dans la région de ressort (3).

4. Collier de fixation selon l'une quelconque des revendications 1 à 3, **caractérisé en ce que** les branches de ressort (1) sont reliées ensemble d'une seule pièce.

5. Collier de fixation selon la revendication 4, **caractérisé en ce que** les branches de ressort (1) sont formées d'un matériau plat en le découpant, chanfreinant et courbant.

6. Collier de fixation selon l'une quelconque des revendications 1 à 5, **caractérisé en ce que** dans la région de ressort (3) les branches de ressort (1) s'étendent parallèlement l'une à l'autre à l'état monté.

7. Collier de fixation selon l'une quelconque des revendications 1 à 6, **caractérisé en ce que** la pièce de verrouillage (9) est formée d'un matériau plat en le découpant et chanfreinant.

8. Collier de fixation selon l'une quelconque des revendications 1 à 7, **caractérisé en ce que** dans la région de maintien (4) les deux branches de ressort (1) présentent chacune une fente (11) pour tenir de chaque côté un raccord à bride dans sa direction axiale.

9. Collier de fixation selon l'une quelconque des revendications 1 à 8, **caractérisé en ce que** les branches de ressort présentent à leurs extrémités libres non liées l'une à l'autre, au-delà de la région de maintien (4), respectivement une partie d'abordage (6) située en biais vers l'extérieur pour l'ouverture de la région de maintien (4) sur l'objet à maintenir.

10. Collier de fixation selon la revendication 9, **caractérisé en ce que** les parties d'abordage (6) sont munies d'une partie d'extrémité (7) davantage pliée vers l'extérieur.

11. Collier de fixation selon l'une quelconque des revendications 1 à 10, **caractérisé en ce que** la pince de verrouillage (9) s'étend sur toute la longueur de la région de ressort (3).

12. Collier de fixation selon l'une quelconque des revendications 3 à 11, **caractérisé en ce que** les logements (12) pour les appendices formant tourillons (13) sont prévus dans les branches de ressort (1).

13. Collier de fixation selon l'une quelconque des revendications 3 à 12, **caractérisé en ce que** les logements (12) sont des trous traversants.

14. Collier de fixation selon l'une quelconque des revendications 3 à 13, **caractérisé en ce que** les logements (12) sont agencés à proximité de l'extrémité de liaison (2) et **en ce qu'**entre la partie de base (8) et les côtés longitudinaux (10) pliés, la pince de verrouillage (9) présente des encoches (20) dans lesquelles les branches de ressort (1) s'engagent lors du basculement de la pince de verrouillage (9) vers le haut.
